# EUROPEAN PATENT SPECIFICATION

(11) **EP 1 982 822 B1**
(45) Date of publication and mention of the grant of the patent: **09.12.2009**
(21) Application number: 07019240.6
(22) Date of filing: 01.10.2007
(51) Int. Cl.: B29C 51/22, B29C 51/44

(54) **Device for moving the mold nest of a press, particularly for manufacturing plastic articles**
Vorrichtung zum Bewegen eines Formnestes für eine Presse, insbesondere zur Herstellung von Kunststoffartikeln
Dispositif pour déplacer une cavité de moule d'une presse, particulièrement pour la fabrication d'articles en plastique

(30) Priority: 16.04.2007 IT MI20070763
(43) Date of publication of application: 22.10.2008
(73) Proprietor: T.F.T. S.R.L., 20052 Monza (MI) (IT)
(72) Inventor: Bianchini, Pierino, 20037 Paderno Dugnano (Milano) (IT); Belardi, Pierluigi, 20090 Rodano (Milano) (IT); Boffelli, Vittorio, 22056 Olgiati Molgora (Como) (IT)
(74) Representative: Forattini, Amelia

(56) References cited:
- EP-A- 1 314 536
- WO-A-03/099541
- WO-A-2004/050322
- DE-A1-102006 003 851
- DE-C- 178 049
- GB-A- 441 790
- GB-A- 2 142 272
- US-A- 5 975 877

## Description

The present invention relates to a device for moving the mold nest of a press, particularly for manufacturing plastic articles.

In particular, the present invention relates to a machine which is provided with a movable lower mold nest, in which the articles are formed and which has at least two operating positions: a position for forming the articles and a position for expelling them.

Machines of this type have the problem of moving the mold nest rapidly enough and precisely enough from the forming position to the expulsion position and vice versa.

In the expulsion position, the movable mold nest is in fact inclined and lowered with respect to the forming position.

Movement of the mold nest is entrusted to a mechanism constituted by a system of levers actuated by cams.

US-4665513 discloses a machine provided with a mechanism of such type.

The aim of the present invention is to provide a device, for moving the mold nest of a press, which is capable of increasing the production rate.

An object of the invention is to provide a mechanical device which is more compact and rigid than similar devices.

Another object of the invention is to provide a device which is less subject to failures and therefore requires less frequent adjustments.

This aim and these and other objects, which will become better apparent hereinafter, are achieved by a device for moving the mold nest of a press, particularly for manufacturing plastic articles, comprising a forming station constituted by a lower mold nest, supported by a movable bed, and a fixed upper mold part; said movable bed having at least one closure position, in which the articles are molded, and at least one position for expelling the formed articles; characterized in that said device comprises a double system of desmodromic cams which are suitable to produce a vertical motion and an oscillating motion of said movable bed in order to move it from said closure position to said expulsion position and vice versa; said double system comprising a first desmodromic system which comprises a first double cam which acts on a parallelogram system, and a second desmodromic system which comprises a second double cam which acts on a second lever system; said parallelogram system being constituted by three levers, one of which is a fork lever associated with said movable bed by an additional lever which substantially forms a toggle with said fork lever.

Further characteristics and advantages will become better apparent from the following detailed description of preferred but not exclusive embodiments of the invention, illustrated by way of non-limiting example in the accompanying drawings, wherein:
Figure 1 is a schematic perspective view of the device according to the present invention;
Figure 2 is a schematic side view of the device in the initial position;
Figure 3 is a view, similar to Figure 2, of the device in a first descent step of the movable mold nest;
Figure 4 is a view, similar to Figure 3, of the device in a subsequent descent step of the movable mold nest;
Figure 5 is a view, similar to Figure 4, of the device in a final descent step of the movable mold nest;
Figure 6 is a view, similar to Figure 5, of the device in a subsequent tilting step of the movable mold nest;
Figure 7 is a view, similar to Figure 6, of the device in a subsequent straightening step of the movable mold nest;
Figure 8 is a view, similar to Figure 7, of the device in a subsequent step of the return of the movable mold nest;
Figure 9 is a side view of the system for guiding the movable mold nest.

With reference to the cited figures, a device according to the invention, generally designated by the reference numeral 1, comprises a forming station 2, which is constituted by a lower mold nest 17, which is supported by a movable bed 3, and by a fixed upper mold part 4, which is rigidly coupled to columns 16 of the press to which the device according to the invention belongs.

The movable bed 3 has a closure position, in which the articles are molded, and a position for expelling the formed articles.

The device 1 comprises a double system of desmodromic cams, which produce a vertical motion and an oscillating motion of the movable bed in order to move it from the closure position to the expulsion position and vice versa.

The device 1 comprises a first desmodromic system having a first cam 5 which acts on a parallelogram system 6, and a second desmodromic system, having a second cam 7 which acts on a second lever system 8.

Both cams 5 and 7 have a double profile and are mounted on a single shaft 9 which is actuated by the motor of the press. The motor is not shown in the figures.

The parallelogram system 6 has a first lever 61, which is pivoted to a second lever 62, which in turn is pivoted to a first arm 63 of a fork lever 10.

The fork lever 10 is pivoted to the frame of the machine in a hinge 11.

The second lever system 8 includes a rocker lever, which is constituted by a first arm 81 and a second arm 82 and is connected to a third lever 83, which in turn is associated with the movable bed 3.

In the parallelogram system 6, the first lever 61 has an end which is pivoted to the frame of the machine in a hinge 64 and another end which is pivoted to the second lever 62 in a hinge 65.

In an intermediate position, the first lever 61 has a cam follower 66 which cooperate with a first profile 51 of the first cam 5.

The second lever 62 is pivoted in the first arm 63 of the fork lever 10 in a hinge 67.

The first arm 63 of the fork lever 10 has a cam follower 68, which cooperates with a second profile 52 of the first cam 5.

The two mutually opposite cam followers 66 and 68 provide, with the first cam 5, the first desmodromic system, which is constituted by the parallelogram system formed by the pivoting points 64, 65, 67 and 11.

The fork lever 10 has a second arm 12, which has a free end 13 which is pivoted within a fourth lever 14 which in turn is pivoted within the movable bed 3 in a hinge 15.

The parallelogram system of the first desmodromic system allows, by means of the rotation of the first cam 5, the vertical motion of the movable bed 3.

In the second lever system 8, the rocker lever is pivoted to the frame of the machine in a hinge 84, which is arranged in the region connecting the arms 81 and 82 which constitute the rocker lever.

The free end of the first arm 81 has a cam follower 85, which cooperates with a first profile 71 of the second cam 7.

The second arm 82 has a cam follower 86, which cooperates with a second profile 72 of the second cam 7.

The second arm 82 has a free end, which is pivoted to the third lever 83 at a hinge 87.

The third lever 83 is hinged to the movable bed 3 at a hinge 88 which is arranged laterally thereto.

The second lever system 8 allows, by means of the rotation of the second cam 7, an oscillating motion of the movable bed 3.

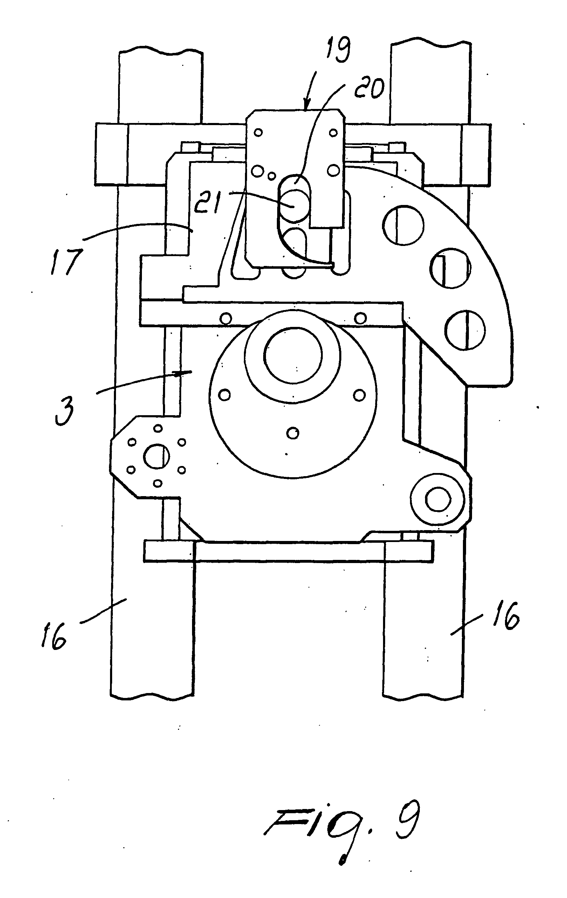

The device according to the present invention also has a centering system, generally designated by the reference numeral 18 and shown in detail in Figure 9.

The centering system 18 comprises a guide 19, which is mounted on the posts 16 of the press and is provided with a contoured slot 20. A wheel 21 runs in the slot 20 and is associated with the movable bed 3.

The centering system 18 allows perfect centering of the mold guiding posts 22, in seats 23 provided in the lower mold nest 17, during the closure of the mold part.

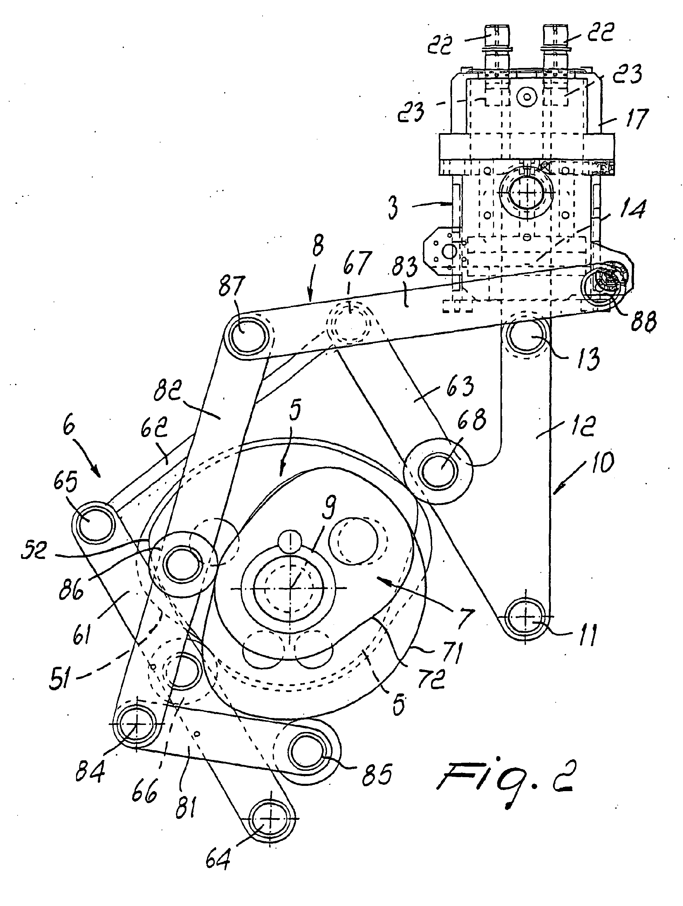

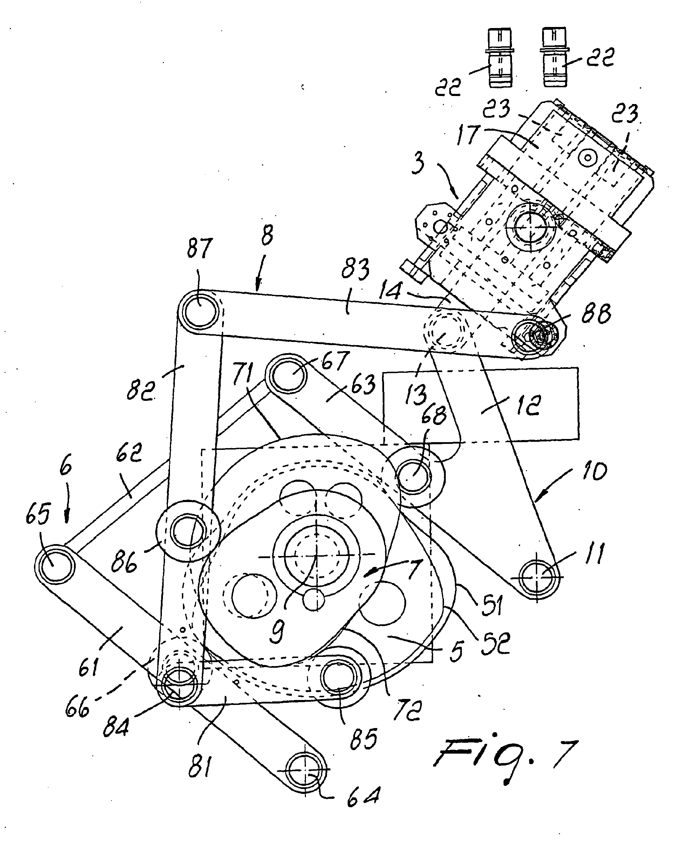

The motion sequence of the movable bed 3 is shown in Figures 2-8.

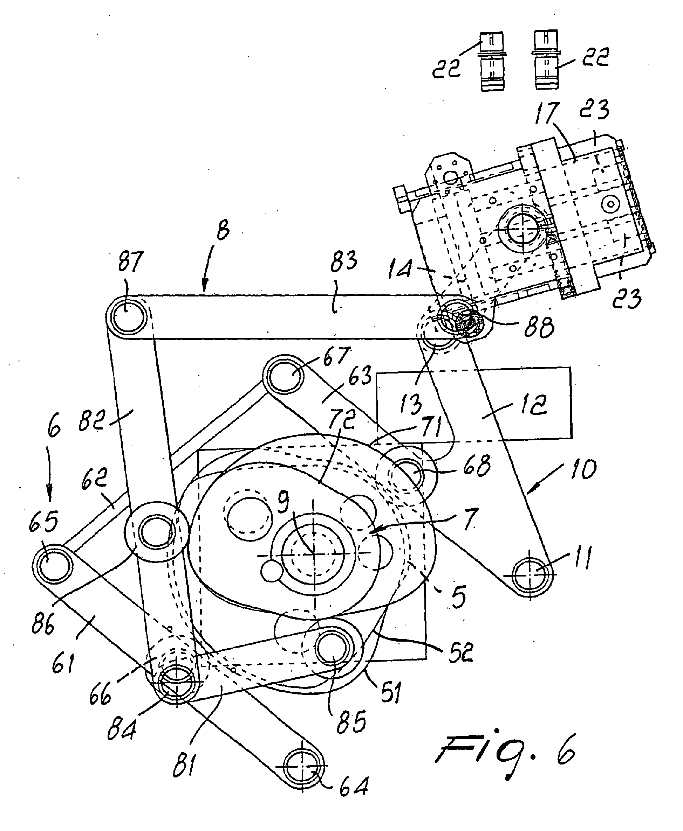

The device allows to move the movable bed 3 from the closure position, shown in Figure 2, in which the articles are molded, to a position for expelling the formed articles, shown in Figure 6, and from the expulsion position again to the closure position in order to repeat the molding and expulsion cycle.

The vertical motion of the movable bed 3 is effected by the first desmodromic system, which is constituted by the parallelogram system 6, as follows.

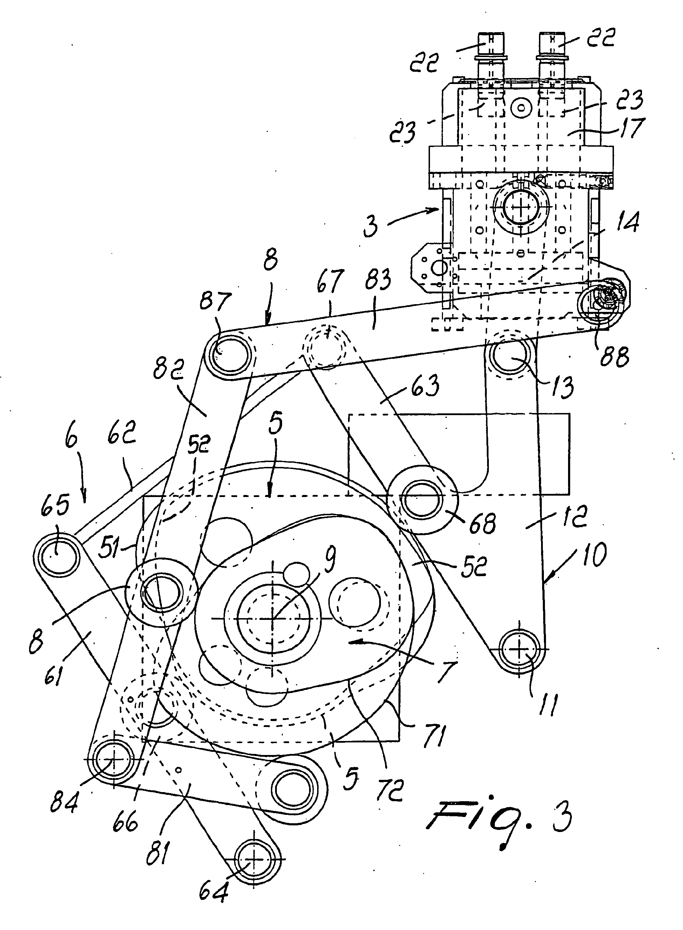

The rotation, counterclockwise with reference to the figures, of the first cam 5 acts on the respective cam follower 66 of the first lever 61 and thus on the fork lever 10, moving it to the left, as shown in Figure 3.

The profile of the cam 5 is such that the initial motion of the fork lever 10 is reduced and slightly lowers the movable bed 3.

In this first step of lowering of the movable bed, the inclination of the second arm 12 and of the fourth lever 14 is in fact minimal.

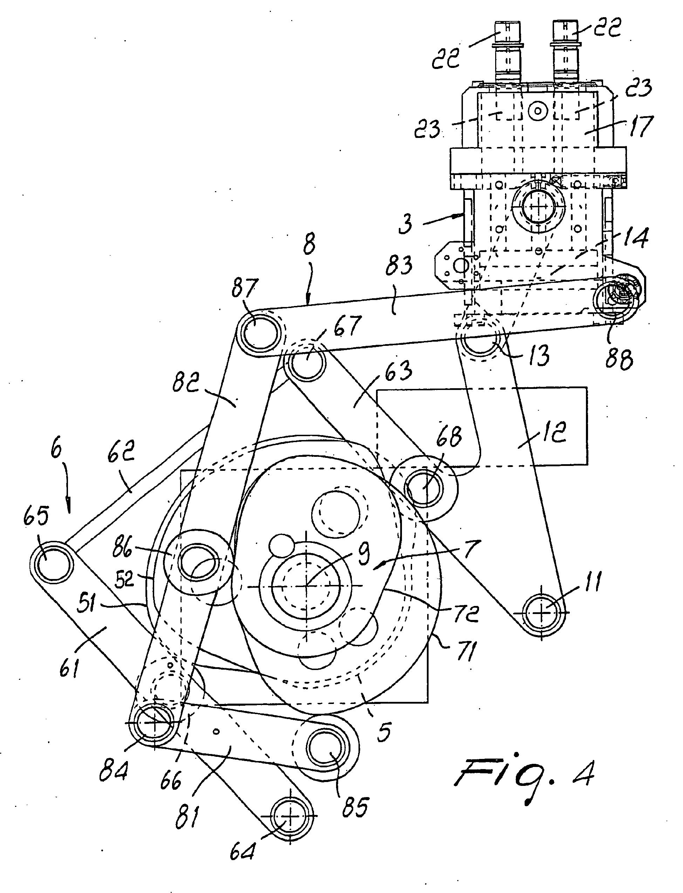

As it continues its rotation, the cam 5 moves the first lever 61 further, completing the lowering motion of the movable bed 3, which arrives in the lowest position, shown in Figure 4.

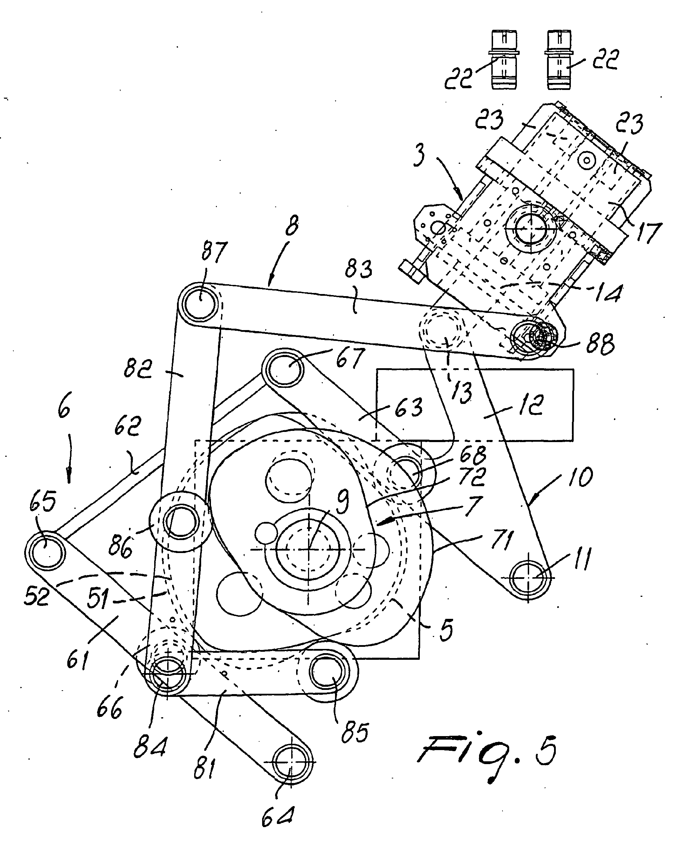

The oscillation of the movable bed begins from this position and its sequence is shown in Figures 5-7.

The rotation of the second cam 7 produces a rotation towards the left, with reference to the figures, of the second arm 82 of the rocker lever, which moves the third lever 83, which by acting on the lateral hinge point 88 of the movable bed 3 produces its rotation to the right about the center formed by the hinge 15, moving the movable bed 3 and the corresponding lower mold nest 17 into the expulsion position, which is visible in Figure 6.

The profile of the second cam 7 is designed to allow the movable bed 3 to remain in the expulsion position for the time required to complete the expulsion of the molded articles, after which the second cam 7 acts on the cam follower 85 of the first arm 81 of the rocker lever, turning the lever clockwise and thus straightening the movable bed 3.

During the step of straightening the movable bed 3, the first cam 5 is activated and acts on the cam follower 68 of the first arm 63 of the fork lever 10, which turns to the right, lifting the movable bed 3.

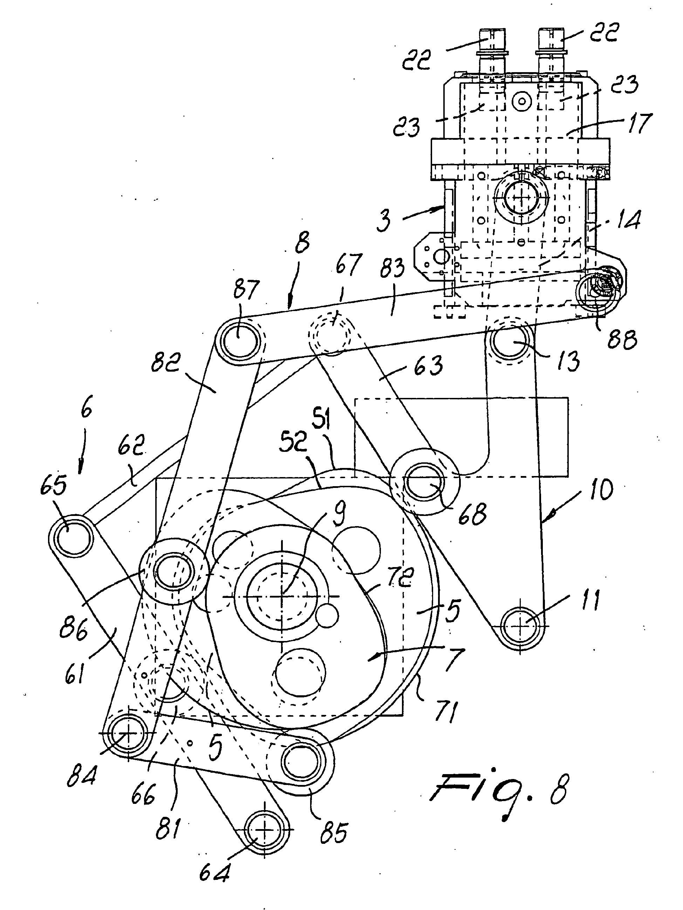

Figure 8 illustrates the movable bed 3 just before the complete closure of the mold nest, in which the levers 10 and 14 are still slightly inclined.

In the closure position, which is shown in Figure 2, the intense stresses applied to the press during the molding operation, which in the long term would cause the failure of the supports of the movable bed 3, constituted by the hinge 11, do not affect the second lever system 8, which is responsible for the oscillating motion of the movable bed, because the lowering of the movable bed is absorbed by the rotation of the lever 83 without forcing the hinge 87 and the other elements of the second lever system 8.

This is advantageous, because it avoids the adjustment of many components of the device or even of the fork lever 10.

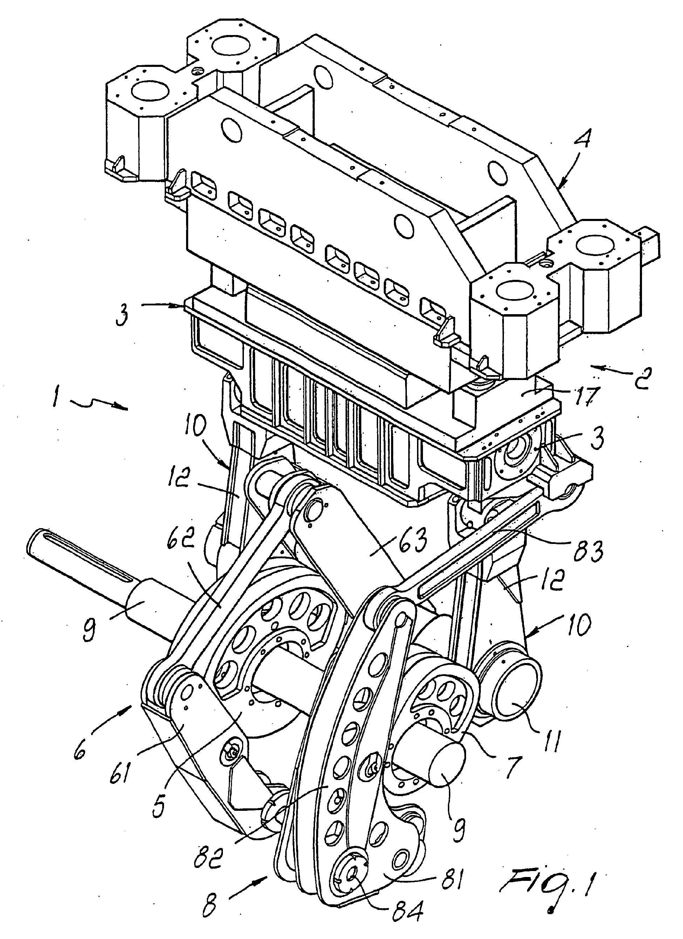

In the embodiment shown in Figure 1, the fork lever 10 is constituted by two side arms 12, which constitute the second arm of the lever, and by a single first central arm 63, which co-operates with the first cam 5, which is mounted on the shaft 9 substantially in a central position with respect to the lateral arms 12.

This arrangement allows a better distribution of forces and limits the deformations of the various components, in particular of the shaft 9.

The second cam 7 and the corresponding second lever system 8 is instead arranged laterally.

In practice it has been found that the invention achieves the intended aim and objects, a motion device having been provided which allows to increase the working speed.

By way of example, the present device allows the machine to work at a rate of over 40 cycles per minute, as opposed to a speed of traditional machines of the same type of at most 30 cycles per minute.

The machine provided with the device according to the present invention is also structurally stronger and more reliable.

A particular advantage of the device according to the present invention is constituted by the fact that, with respect to similar conventional machines, a connecting lever has been eliminated in the kinematic chain of the movable bed, making the device more compact and rigid.

## Claims

1. A device for moving the mold nest of a press, particularly for manufacturing plastic articles, comprising a forming station constituted by a lower mold nest (17), supported by a movable bed (3), and a fixed upper mold part (4), said movable bed having at least one closure position, in which the articles are molded, and at least one position for expelling the formed articles; **characterized in that** said device comprises a double system of desmodromic cams which are suitable to produce a vertical motion and an oscillating motion of said movable bed in order to move it from said closure position to said expulsion position and vice versa; said double system comprising a first desmodromic system which comprises a first double cam (5) which acts on a parallelogram system (6), and a second desmodromic system which comprises a second double cam (7) which acts on a second lever system (8); said parallelogram system being constituted by three levers (6, 62, 10), one of which is a fork lever (10) associated with said movable bed by an additional lever which substantially forms a toggle with said fork lever.

2. The device according to claim 1, **characterized in that** each of said double cams has a double profile and both are mounted on a single shaft (9) which is actuated by a motor of the press.

3. The device according to claim 1 or 2, **characterized in that** said parallelogram system comprises a first lever (61) which is pivoted to a second lever (62) which in turn is pivoted to a first arm of said fork lever (10).

4. The device according to one or more of the preceding claims, **characterized in that** said fork lever (10) is hinged to the frame of the machine.

5. The device according to one or more of the preceding claims, **characterized in that** said second lever system comprises a rocker lever, which is constituted by a first arm (63) and a second arm (82), and is connected to a third lever (83), said third lever being associated with said movable bed (3).

6. The device according to one or more of the preceding claims, **characterized in that** said first lever (61) of said parallelogram system has an end which is hinged to the frame of the machine and another end which is hinged to said second lever (62).

7. The device according to one or more of the preceding claims, **characterized in that** said first lever (61) has a cam follower (66) in an intermediate position, said cam follower cooperating with said first cam.

8. The device according to one or more of the preceding claims, **characterized in that** said second lever (62) is hinged to said first arm of said fork fever (10).

9. The device according to one or more of the preceding claims, **characterized in that** said first arm (81) of said fork lever has a cam follower (85) which cooperates with said first cam.

10. The device according to one or more of the preceding claims, **characterized in that** said cam followers (85) are mutually opposite and provide, together with said first cam, said first desmodromic system.

11. The device according to one or more of the preceding claims, **characterized in that** said fork lever (10) has a second arm (12), which has a free end which is hinged to said lever, said lever being hinged to said movable bed.

12. The device according to one or more of the preceding claims, **characterized in that** said rocker lever of said second lever system (8) is hinged to the frame of the machine in a hinge (84) which is arranged in the region connecting said arm (81, 82) which constitute said rocker lever.

13. The device according to one or more of the preceding claims, **characterized in that** the free end of said first arm of said rocker lever comprises a cam follower (85) which cooperates with a first profile (71) of said second cam (7).

14. The device according to one or more of the preceding claims, **characterized in that** said second arm (82) of said rocker lever has a cam follower (86), which cooperates with a second profile (72) of said second cam (7).

15. The device according to one or more of the preceding claims, **characterized in that** said second arm (82) of said rocker lever has a free end which is pivoted to said third lever (83), said third lever being pivoted to said movable bed (3) in a hinge (88) which is arranged laterally thereto.

16. The device according to one or more of the preceding claims, **characterized in that** it comprise a centering system (18), which is constituted by a guide (19) which is mounted on the posts (16) of the press and is provided with a contoured slot (20), a wheel running in said slot and being associated with said movable bed (3).

17. The device according to one or more of the preceding claims, **characterized in that** said centering system allows the centering of the mold guiding post (22) within seats (23) of the lower mold part during its closure step.

18. The device according to one or more of the preceding claims, **characterized in that** said fork lever (10) is constituted by two side arms (12) which constitute said second arm of the lever, and by a single first central arm (63), which cooperates with said first cam (5), which is mounted on said shaft (9) substantially in a central position with respect to said side arms.

## Patentansprüche

1. Vorrichtung zum Bewegen des Formennestes für eine Presse, insbesondere zur Herstellung von Kunststoffartikeln, umfassend eine Formstation, die durch ein von einem beweglichen Bett (3) getragenes unteres Formennest (17) und ein feststehendes oberes Formenteil (4) gebildet ist, wobei das bewegliche Bett zumindest eine geschlossene Position, in der die Artikel geformt werden, und eine Position für den Auswurf der Artikel aufweist, **dadurch gekennzeichnet, dass** die Vorrichtung ein Doppelsystem von desmodromischen Nocken umfasst, die eine vertikale Bewegung und eine oszillierende Bewegung des beweglichen Betts erzeugen können, um dieses von der geschlossenen Position in die Auswurfposition zu bewegen und umgekehrt; wobei das Doppelsystem ein erstes desmodromisches System mit einem ersten Doppelnocken (5), der auf ein Parallellogrammsystem (6) wirkt, und ein zweites desmodromisches System mit einem zweiten Doppelnocken (7), der auf ein zweites Hebelsystem (8) wirkt, umfasst, wobei das Parallellogrammsystem durch drei Hebel (61, 62, 10) gebildet ist, wovon einer ein Gabelhebel (10) ist, der durch einen weiteren Hebel, der mit dem Gabelhebel im Wesentlichen einen Gelenkhebel bildet, mit dem beweglichen Bett verbunden ist.

2. Vorrichtung nach Anspruch 1, **dadurch gekennzeichnet, dass** jeder der Doppelnocken ein Doppelprofil hat und dass beide an einer einzigen Welle (9) montiert sind, die durch einen Motor der Presse betätigt wird.

3. Vorrichtung nach Anspruch 1 oder 2, **dadurch gekennzeichnet, dass** das Parallellogrammsystem einen ersten Hebel (61) umfasst, der an einem zweiten Hebel (62) schwenkbar gelagert ist, der wiederum an einem ersten Arm des Gabelhebels (10) schwenkbar gelagert ist.

4. Vorrichtung nach einem oder mehreren der vorhergehenden Ansprüche, **dadurch gekennzeichnet, dass** der Gabelhebel (10) an dem Rahmen der Maschine angelenkt ist.

5. Vorrichtung nach einem oder mehreren der vorhergehenden Ansprüche, **dadurch gekennzeichnet, dass** das zweite Hebelsystem einen Kipphebel umfasst, der durch einen ersten Arm (63) und einen zweiten Arm (82) gebildet und mit einem dritten Hebel (83) verbunden ist, wobei der dritte Hebel mit dem beweglichen Bett (3) verbunden ist.

6. Vorrichtung nach einem oder mehreren der vorhergehenden Ansprüche, **dadurch gekennzeichnet, dass** der erste Hebel (61) des Parallellogrammsystems ein Ende hat, das an dem Rahmen der Maschine angelenkt ist, und ein weiteres Ende, das an dem zweiten Hebel (62) angelenkt ist.

7. Vorrichtung nach einem oder mehreren der vorhergehenden Ansprüche, **dadurch gekennzeichnet, dass** der erste Hebel (61) in einer Zwischenposition einen Nockenstößel (66) aufweist, der mit dem ersten Nocken zusammenwirkt.

8. Vorrichtung nach einem oder mehreren der vorhergehenden Ansprüche, **dadurch gekennzeichnet, dass** der zweite Hebel (62) an dem ersten Arm des Gabelhebels (10) angelenkt ist.

9. Vorrichtung nach einem oder mehreren der vorhergehenden Ansprüche, **dadurch gekennzeichnet, dass** der erste Arm (81) des Gabelhebels einen Nockenstößel (85) aufweist, der mit dem ersten Nocken zusammenwirkt.

10. Vorrichtung nach einem oder mehreren der vorhergehenden Ansprüche, **dadurch gekennzeichnet, dass** die Nockenstößel (85) einander gegenüberliegen und zusammen mit dem ersten Nocken das erste desmodromische System bilden.

11. Vorrichtung nach einem oder mehreren der vorhergehenden Ansprüche, **dadurch gekennzeichnet, dass** der Gabelhebel (10) einen zweiten Arm (12) aufweist, der ein freies Ende hat und der an dem Hebel angelenkt ist, wobei der Hebel an dem beweglichen Bett angelenkt ist.

12. Vorrichtung nach einem oder mehreren der vorhergehenden Ansprüche, **dadurch gekennzeichnet, dass** der Kipphebel des zweiten Hebelsystems (8) in einem Scharnier (84), das in dem Bereich angeordnet ist, der die den Kipphebel bildenden Arme (81, 82) verbindet, an dem Rahmen der Maschine angelenkt ist.

13. Vorrichtung nach einem oder mehreren der vorhergehenden Ansprüche, **dadurch gekennzeichnet, dass** das freie Ende des ersten Arms des Kipphebels einen Nockenstößel (85) aufweist, der mit einem ersten Profil (71) des zweiten Nockens (7) zusammenwirkt.

14. Vorrichtung nach einem oder mehreren der vorhergehenden Ansprüche, **dadurch gekennzeichnet, dass** der zweite Arm (82) des Kipphebels einen Nockenstößel (86) hat, der mit einem zweiten Profil (72) des zweiten Nockens (7) zusammenwirkt.

15. Vorrichtung nach einem oder mehreren der vorhergehenden Ansprüche, **dadurch gekennzeichnet, dass** der zweite Arm (82) des Kipphebels ein freies Ende hat, das mit dem dritten Hebel (83) schwenkbar verbunden ist, wobei der dritte Hebel in einem Scharnier (88), das seitlich des beweglichen Betts (3) angeordnet ist, schwenkbar mit dem beweglichen Bett verbunden ist.

16. Vorrichtung nach einem oder mehreren der vorhergehenden Ansprüche, **dadurch gekennzeichnet, dass** ein Zentriersystem (18), das durch eine Führung (19) gebildet wird, an den Ständern (6) der Presse montiert ist und mit einem konturierten Schlitz (20) versehen ist, in dem ein mit dem beweglichen Bett (3) verbundenes Rad läuft.

17. Vorrichtung nach einem oder mehreren der vorhergehenden Ansprüche, **dadurch gekennzeichnet, dass** das Zentriersystem das Zentrieren der Führungsstäbe (22) der Form in Aufnahmen (23) des unteren Formenteils während seines Schließschrittes erlaubt.

18. Vorrichtung nach einem oder mehreren der vorhergehenden Ansprüche, **dadurch gekennzeichnet, dass** der Gabelhebel (10) durch zwei Seitenarme (12) gebildet wird, die den zweiten Arm des Hebels bilden, und durch einen einzelnen ersten zentralen Arm (63), der mit dem ersten Nocken (5) zusammenwirkt, der an der Welle (9) im Wesentlichen in einer zentralen Position relativ zu den Seitenarmen montiert ist.

## Revendications

1. Dispositif permettant de déplacer l'empreinte de moulage d'une presse, destiné en particulier à la fabrication d'articles en matière plastique, comprenant une station de formage constituée d'une empreinte inférieure (17) de moulage soutenue par un lit mobile (3) et une partie supérieure fixe (4) de moulage, ledit lit mobile prenant au moins une position de fermeture, dans lequel les articles sont moulés, et au moins une position permettant de faire sortir les articles formés ; **caractérisé en ce que** ledit dispositif comprend un double système de cames desmodromiques qui permettent de produire un mouvement vertical et un mouvement oscillant dudit lit mobile, afin de le déplacer à partir de ladite position de fermeture vers ladite position d'expulsion et vice versa ; ledit système double comprenant un premier système desmodromique qui comprend une première double came (5) qui agit sur un système (6) de parallélogrammes et un deuxième système desmodromique qui comprend une deuxième double came (5) qui agit sur un deuxième système (8) à levier, ledit système de parallélogrammes étant constitué de trois leviers (61, 62, 10), dont un est un levier (10) à fourche associé audit lit mobile par un levier supplémentaire qui forme pratiquement une genouillère avec ledit levier à fourche.

2. Dispositif selon la revendication 1, **caractérisé en ce que** chacune desdites doubles cames présente un double profil et **en ce que** les deux sont montés sur un arbre simple (9) qui est actionné par un moteur de la presse.

3. Dispositif selon la revendication 1 ou 2, **caractérisé en ce que** ledit système de parallélogrammes comprend un premier levier (61) qui pivote vers un deuxième levier (62) qui de son côté pivote vers un premier bras dudit levier (10) à fourche.

4. Dispositif selon une ou plusieurs des revendications précédentes, **caractérisé en ce que** ledit levier (10) à fourche est articulé sur le bâti de la machine.

5. Dispositif selon une ou plusieurs des revendications précédentes, **caractérisé en ce que** ledit deuxième levier à fourche comprend un culbuteur constitué d'un premier bras et d'un deuxième bras (82) et qui est relié à un troisième levier (83), ledit troisième levier étant associé audit lit mobile (3).

6. Dispositif selon une ou plusieurs des revendications précédentes, **caractérisé en ce que** ledit premier levier (61) dudit système de parallélogrammes présente une extrémité articulée au bâti de la machine et une autre extrémité articulée audit deuxième levier (62).

7. Dispositif selon une ou plusieurs des revendications précédentes, **caractérisé en ce que** ledit premier levier (61) comporte une contre-came (66) dans une position intermédiaire, ladite contre-came coopérant avec ladite première came.

8. Dispositif selon une ou plusieurs des revendications précédentes, **caractérisé en ce que** ledit deuxième levier (62) est articulé audit premier bras dudit levier (10) à fourche.

9. Dispositif selon une ou plusieurs des revendications précédentes, **caractérisé en ce que** ledit premier bras (81) dudit levier à fourche comporte une contre-came (85) qui coopère avec ladite première came.

10. Dispositif selon une ou plusieurs des revendications précédentes, **caractérisé en ce que** lesdites contre-cames (85) sont mutuellement opposées et **en ce qu'**elles constituent, conjointement avec ladite première came, ledit premier système desmodromique.

11. Dispositif selon une ou plusieurs des revendications précédentes, **caractérisé en ce que** ledit levier (10) à fourche comporte un deuxième bras (12) comportant une extrémité libre articulée audit levier, ledit levier étant articulé audit lit mobile.

12. Dispositif selon une ou plusieurs des revendications précédentes, **caractérisé en ce que** ledit levier à fourche dudit deuxième système (8) à levier est articulé au bâti de la machine dans une articulation (84) qui se trouve dans la zone reliant lesdits bras (81, 82) constituant ledit culbuteur.

13. Dispositif selon une ou plusieurs des revendications précédentes, **caractérisé en ce que** l'extrémité libre dudit premier bras dudit culbuteur comprend une contre-came (85) qui coopère avec un premier profil (71) de ladite deuxième came (7).

14. Dispositif selon une ou plusieurs des revendications précédentes, **caractérisé en ce que** ledit deuxième bras (82) dudit culbuteur comporte une contre-came (86) qui coopère avec un deuxième profil (72) de ladite deuxième came (7).

15. Dispositif selon une ou plusieurs des revendications précédentes, **caractérisé en ce que** ledit deuxième bras (82) dudit culbuteur comporte une extrémité libre qui pivote autour dudit troisième levier (83), ledit troisième levier pivotant autour dudit lit mobile (3) dans une charnière (88) qui est disposée latéralement par rapport à celui-ci.

16. Dispositif selon une ou plusieurs des revendications précédentes, **caractérisé en ce qu'**il comprend un système de centrage (18) qui est constitué par un guide (19) qui est monté sur les piliers (16) de la presse et qui est doté d'une fente (20) à contour, une roue tournant dans ladite fente et étant associée audit lit mobile (3).

17. Dispositif selon une ou plusieurs des revendications précédentes, **caractérisé en ce que** ledit système de centrage permet le centrage des piliers (22) de guidage du moule au sein des pièces d'appui (23) de la partie inférieure du moule lors de son étape de fermeture.

18. Dispositif selon une ou plusieurs des revendications précédentes, **caractérisé en ce que** ledit levier (10) à fourche est constitué de deux bras latéraux (12) qui constituent ledit deuxième bras du levier, et d'un premier bras central simple (63) qui coopère avec ladite première came (5) qui est montée sur ledit arbre (9), sensiblement en position centrale par rapport aux dits bras latéraux.
